Europäisches Patentamt

(19) European Patent Office

Office européen des brevets

(11) Veröffentlichungsnummer: **0 097 361**
**A1**

(12) # EUROPÄISCHE PATENTANMELDUNG

(21) Anmeldenummer: 83106040.5

(22) Anmeldetag: 21.06.83

(51) Int. Cl.³: **E 04 B 2/56**
**F 24 F 7/06**

(30) Priorität: 21.06.82 DE 3223098

(43) Veröffentlichungstag der Anmeldung:
04.01.84 Patentblatt 84/1

(84) Benannte Vertragsstaaten:
AT BE CH DE FR GB IT LI LU NL SE

(71) Anmelder: Mechthild Stute-Rittel
St. Helenen-Strasse 14
D-5963 Wenden-Elben(DE)

(72) Erfinder: Stute, Hans Joachim
St. Helenenstrasse 14
D-5963 Wenden-Elben(DE)

(72) Erfinder: Kleusberg, Karl-Heinz
Lindenweg 1
D-5226 Reichshof-Denklingen(DE)

(72) Erfinder: Bartussek, Helmut, Dr.-Ing.
Falkenburg 134
A-8952 Irdning(AT)

(74) Vertreter: Missling, Arne, Dipl.-Ing. et al,
Patentanwälte Dipl.-Ing. R. Schlee Dipl.-Ing. A. Missling
Bismarckstrasse 43
D-6300 Giessen(DE)

(54) Wandelemente für Fertighäuser.

(57) Die Wände von Häusern, insbesondere von Fertighäusern, haben bei hoher Wärmedämmung eine nur geringe Luftdurchlässigkeit. Darüberhinaus werden diese Fertighäuser im allgemeinen aus nicht diffusionsfähigen und/oder belüftungsfähigen, biologischen, feinporigen Materialien hergestellt, so daß diese nicht sehr wohngesund sind. Für die Ausbildung eines Wand- und Deckenelementes für wohngesunde Häuser, insbesondere Fertighäuser, mit hoher Atmungsfähigkeit, wird ein Wand- und Deckenelement (1) verwendet, das aus einer größeren luftundurchlässigen Verkleidungsplatte (10) besteht, an die sich eine allseitig geschlossene Luftzone (9a) anschließt, die sich über die gesamte Fläche des Wand- und Deckenelementes erstreckt. Diese Luftzone (9a), die eine Klimazone bildet, liegt zwischen der Verkleidungsplatte (10) und der tragenden Konstruktion (2-6), wobei die Verkleidungsplatte (10) über Abstandselemente (8, 9) mit der tragenden Konstruktion verbunden ist. Die tragende Konstruktion bildet eine Porenwand mit einer Luftdurchlässigkeit von 1 - 6 m³/h × m². Die Klimazone (9a) ist über Zu- und Abluftkanäle (13) an ein Leitungssystem angeschlossen, in dem Ventilatoren zur Druckerzeugung angeordnet sind.

./...

FIG. 3

FIG 4

TREPPEN
HAUS

Patentanwälte

Dipl.-Ing. Richard Schlee
Dipl.-Ing. Arne Missling

6300 Lahn-Giessen 1, 21.06.1983
Bismarckstrasse 43
Telefon: (0641) 71019

0097361

Mi/H 15.169

Mechthild Stute-Rittel,
St.Helenen-Straße 14, 5963 Wenden-Elben

Wandelemente für Fertighäuser

Die Erfindung betrifft ein Klima-Wand und Deckenelement, insbesondere für Fertighäuser.

Herkömmliche Fertighäuser in Sandwichbauweise bestehen aus einer Innenfachwerkkonstruktion als tragendes Fachwerk, welche eine Aussteifung durch eine Spanplatte, durch eine kraftschlüssig vernagelte Holzverbretterung oder durch Verstrebungen erhält. Hinzu kommen Wärmedämmstoffe zwischen dem tragenden Fachwerk in Verbindung mit Dampfsperren - oder Dampfbremsen sowie eine Abschlußplatte nach außen, in der Regel aus einer Spanplatte und einer Putzträgerplatte. Innen besteht die Abschlußplatte aus Spanplatten und/oder Gipskartonplatten. Die Dampfdiffusion wird durch Dampfsperren- oder Dampfbremsen ganz oder weitgehend verhindert. Die Wärmedämmstoffe bestehen in der Regel aus Mineralfasern oder Polystrolplatten bzw. Schüttmaterial.

Die Möglichkeiten, die der Naturbaustoff Holz bietet, ein natürliches vollatmungsfähiges Wandelement zu bauen, werden bei dieser Bauweise, insbesondere durch die Dampfbremsen, die Imprägnierung und die Wahl der dazu sonst noch verwandten Baumaterialien nicht ausgenutzt. Das gilt auch für die Konstruktionen, bei denen man die Dampfsperren bzw. Dampfbremsen in Fortfall kommen ließ, und als Dämmstoff auf Kork und auf Versteifungen durch innere und äußere Holzverbretterungen zurückgegriffen hat. Ein diffusionsoffenes Wandelement für ein Haus zu bauen, ist bisher nicht befriedigend gelöst worden. Das trifft auch dann zu, wenn die äußere Verkleidung der Holzkonstruktion nur aus einer Holzwoll-Leichtbau.platte, bzw.
mit Magnesitbindung besteht, weil zum einen diese Platte
nicht genügend Wasserdampf aufnehmen und wieder abgeben
kann, zum anderen, weil die Wärmedämmung nicht ausreicht.

Das gilt umsomehr, wenn außen noch zur Aussteifung Holzbretter mit Nut- und Feder vernagelt werden und darauf
eine Holzwoll-Leichtbauplatte als Putzträger befestigt
wird. Die äußere Holzverkleidung wirkt dabei dampfsperrend.

Hinzu kommt, daß durch ein solches Wandelement auch mit
biologischer Ausrüstung und biologischen Dämmaterial genau
so wenig die Lufterneuerung gewährleistet ist, wie durch
ein normales Fertighaus mit Dampfsperren, bzw. Dampfbremsen,
da heute in Verbindung mit der Wärmedämmung alle Fenster luftdicht abgedichtet sind und die notwendige Lufterneuerung durch
die Fenster nur in der warmen Jahreszeit im ausreichenden Umfange möglich ist. Bei den heutigen Neubauten kommt dem Luftwechsel die entscheidende Bedeutung für das Wohlbefinden der
Bewohner und deren Gesundheit zu.

Der Erfindung liegt die Aufgabe zugrunde, ein Wandelement, insbesondere für Fertighäuser vorzuschlagen, das die an ein derartiges Wandelement zu stellenden Forderungen im Hinblick auf
Wärmedämmung erfüllt und das darüberhinaus eine wesentlich
bessere Atmungsfähigkeit und Diffusionsfähigkeit besitzt als
bisher gebaute Häuser, so daß die zugfreie Lufterneuerung auch
ohne Öffnen der Fenster möglich ist und darüberhinaus ein ständiger Luftaustausch sowohl von innen nach außen als auch in umgekehrter Richtung erhalten werden kann. Eine weitere Aufgabe
der Erfindung besteht darin, das Wandelement allein unter Verwendung biologischer Baustoffe oder unter Verwendung von biologisch völlig unbedenklichen Baustoffen zu erstellen, wobei
durch Auswahl der Werkstoffe dieses vergleichsweise kostengünstig
sein soll.

- 3 -

Diese Aufgabe wird erfindungsgemäß durch die Merkmale des kennzeichnenden Teils des Anspruches 1 gelöst.

Ein erfindungsgemäßes Klima-, Wand- und Deckenelement besteht aus einer äußeren Verkleidungsplatte, die entweder selbst luftundurchlässig ist oder aber mit einem Putz beschichtet ist, der die Luftundurchlässigkeit des Wand- bzw. Deckenelementes nach außen hin gewährleistet. An die Verkleidungsplatte schließt sich eine Klimazone an, die sich über die gesamte Fläche des Wand- bzw. Deckenelementes erstreckt. Diese kann z.B. dadurch erreicht werden, daß das Verkleidungselement mit Abstandselementen an der eigentlichen Tragkonstruktion befestigt wird. Im einfachsten Fall erhält man die Klimazone dadurch, daß auf der tragenden Konstruktion eine Lattung aufgebracht wird, auf die wiederum eine Querlattung aufgebracht wird, an der die Verkleidungsplatte dann befestigt ist. Man erhält so einen Luftzwischenraum zwischen der tragenden Konstruktion und der äußeren Verkleidungsplatte. Die tragende Konstruktion besteht vorteilhaft aus einem Fachwerk mit Ständern, Ober- und Untergurt, das durch Streben versteift ist. Die Zwischenräume zwischen dem Fachwerk werden mit einem Wärmedämmaterial ausgefüllt, das eine Luftdurchlässigkeit in der Größenordnung von 1 - 6 $m^3/h \times m^2$ aufweist, so daß die tragende Konstruktion als Porenwand dient, und ein Luftaustausch zwischen der Innenseite der tragenden Konstruktion, d.h. dem Wohnraum, und der Klimazone erfolgen kann. Die Klimazone als solche ist in sich geschlossen im Wandelement ausgebildet und weist lediglich Anschlüsse für einen oder mehrere Ab- und Zulunftkanäle auf. Die Materialien, die am besten für den Aufbau der Wand geeignet sind und gegebenenfalls aus biologischen Baustoffen bestehen können, sind nachstehend erläutert. Die Belüftung eines mit einem erfindungsgemäßen Wand- und Deckenelement erstellten Fertighauses erfolgt dadurch, daß in der Klimazone, die dann das ganze Haus umgibt, entweder ein Überdruck oder ein Unterdruck erzeugt wird. Wird in der Klimazone ein Überdruck erzeugt, so strömt die Luft aus der Klimazone durch die Porenwand in das Innere des Raumes ein, wobei sie beim Durchströmen der Porenwand gleichzeitig erwärmt wird. Im umgekehrten Fall, in dem in der Klimazone ein Unterdruck erzeugt wird, strömt die Luft aus dem Raum durch die Porenwand in die Klimazone ein und wird dann aus dieser heraus abgesaugt.

Das zu versteifende Element besteht aus einer Fachwerkrahmenkonstruktion, wobei die Aussteifung des Fachwerks mittels quer und schräg verlaufender Verstrebungen an den beiden Eckstücken des Elementes, das bis 12 m oder auch mehr lang sein kann, erreicht wird.

Die zwischen den Ständern eingelegte Wärmeisolation kann z.B. aus einer Dämmatte aus Kokosfaser, die mit Wasserglas behandelt ist, und/oder einer magnesitgebundenen Leichtbauplatte ausgeführt sein. Es ist auch denkbar, eine kalklehmgebundene Woll- oder Strohleichtbauplatte einzusetzen. In jedem Fall ist es wichtig, daß die Luftdurchlässigkeit der Porenwand im Bereich von 1 - 6 m³/h x m² liegt. Das Dämmmaterial wird in Zwischenräumen des Fachwerks von der Konterlattung gehalten, auf die von außen die Verkleidungsplatte aufgesetzt ist, die vorteilhaft aus einer Calciumsilikatplatte mit einer Mindeststärke von 35 mm besteht. Auf diese Verkleidungsplatte wird vorteilhaft ein zweischichtiger mineralischer Calciumsilikataußenputz mit Faserverstärkung so aufgebacht, daß zwischen der ersten und zweiten Schicht zur Aufnahme der Wärmespannung ein Seidengittergewebe eingelegt werden kann.

Auf der Verlattung ist somit eine schlag- und druckfeste, in etwa 50 mm starke Außenhaut aufgebracht, die nicht nur die Festigkeit eines normalen, auf festem Untergrund aufgetragenen Putzes aufweist, sondern eine Wasserdampf-Diffusionsfähigkeit besitzt, die bisher von keinem anderen festen für Außenwandungen geeigneten Baustoff auch nur annähernd erreicht wird. Die Außenwandung ist darüberhinaus verrottungsfest, witterungsbeständig, termitenbeständig und vor allen Dingen volumenbeständig, des weiteren brandsicher und hochwasserdampfdurchlässig. Die Calciumsilikatplatte besteht zu 90 % aus Mikroporen mit Porenradien, die kleiner als 2o µm und darüberhinaus mit Luft gefüllt sind. Über die hohe Wärmedämmfähigkeit hinaus zeigt die Platte die Fähigkeit, Feuchtigkeit in großen Mengen aufzunehmen und an die Außenluft abzugeben, was von Holz oder auch von anderen Materialien nicht annähernd erreicht wird.

Die Klimazone ist somit nach außen hin durch eine zwar luftdichte, jedoch wasserdampfaufnehmende und -abgebende Schicht abgeschlossen, die die Voraussetzung dafür schafft, daß die Klimazone in Verbindung mit den Zu- und Abluftleitungen, die vorteilhaft in einen Ringkanal münden, die Funktion einer Lunge mit Atmungsfunktion für das Haus erhält. Die eigentlichen tragenden Wände des Hauses sowie die gewählte Dämmung in der Dachkonstruktion werden durch die Wahl des dazu geeigneten Wärmedämmaterials luftdurchlässig und bis zu einem gewissen Grad wärme- und wasserspeichernd. Mit Hilfe der Klimazone erreicht man, daß die Wärmeverluste während der Heizperiode um bis zu 60 % reduziert werden können.

Die Atmungslüftung entsteht in einem rhythmischen Wechsel der Luftdruckverhältnisse in der Klimazone und wird durch ein oder mehrere Ventilatoren erzeugt. Die Betriebsweise besteht aus zwei periodisch wechselnden Phasen und entspricht in der Art dem Prinzip regenerativen Wärmetauschern, wobei die Außenwand und Deckenflächen wechselnd durchströmte Tauscherflächen darstellen. In der Phase 1 wird Frischluft durch den Ventilator in die Klimazone gedrückt und strömt dann großflächig durch den luftdurchlässigen Teil der Außenwand von der kalten zur warmen Seite in den Innenraum, wobei die in den Wandschichten gespeicherte Wärme sowie die Transmissionswärme zur Anwärmung der Frischluft verwandt wird. Durch die Innentüren angeordnete Nachstromöffnungen wird dem Luftstrom in das Hausinnere kein nennenswerter Widerstand entgegengesetzt. Die Abluft strömt aus dem Hausinneren über die Schräg- und Deckenflächen des Dachgeschosses in den natürlich belufteten Raum zwischen den Deckenflächen und der Dachhaut und gibt durch die als Tauscherflächen dienenden Schräg- und Deckenflächen die Wärme teilweise wieder ab.

Bei der Phase 2 wird die Strömungsrichtung durch die Ventilatoren umgekehrt, d.h. Luft wird nunmehr aus der Klimazone abgesaugt. Aus der unterlüfteten Dachkonstruktion strömt nun die Luft über die Schräg- und Deckenflächen des Dachgeschosses in das Hausinnere ein, wobei sie sich erwärmt. Sie strömt durch die Porenwand in die Klimazone und über die Ventilatoren nach außen. Hierbei gibt sie ihre Wärme an die Porenwand ab. Die optimale Phasendauer hängt von der Speicherkapazität und der Wärmeeindringzahl der durchströmten Flächen ab. Der Phasenwechsel kann durch die Temperaturfühler in den Grenzschichten oder durch eine Zeitschaltuhr oder aber auch manuell gesteuert werden.

Der Wandaufbau ist so gehalten, daß innerhalb der tragenden Konstruktion bestimmte Wasserdampfmengen für eine gewisse Zeit schadlos gebunden werden können. Dazu dienen z.B. organische Faserstoffe sowie entsprechende Mengen von Lehm und/oder Tonmineralien (Bentonit), und Kokosfaser. Diese Stoffe können bis zum Zwanzigfachen des eigenen Gewichts Wasser aufnehmen. Hierdurch kann schadlos Wasserdampf massenstromdicht bis 10 g pro m² und Stunde durch die luftdurchlässigen Flächen abgegeben werden. Bildet sich kurzfristig Kondenswasser, so wird dieses beim Phasenwechsel wieder aufgenommen. In diesem Zusammenhang muß jedoch sichergestellt sein, daß die Klimazone der Wände nach außen hin durch die

0097361

Verkleidungsplatten (Außenschale) luftdicht abgeschlossen ist, die andererseits schadlos Wasser und Wasserdampf aufnehmen und durch die Diffusion und kapilare Leitfähigkeit nach außen abführen können.

Das Klima-Wand- und Deckenelement gemäß der Erfindung sichert nicht nur eine absolut zugfreie und hygienisch einwandfreie Frischluftversorgung für die Bewohner des Hauses, sondern es wird auch eine stärkere Reduktion der gesamten Wärmeverluste hierdurch erreicht, im Mittel etwa 50 %, bezogen auf ein Haus mit guter Wärmedämmung.

Die Phase 2 kann noch durch eine dritte Phase ergänzt werden, in der ein weiterer Ventilator aktiviert ist, und entweder kühle oder warme Luft in die Klimazone eindrückt,die dann durch die Wand in das Innere des Hauses einströmt. Hierdurch kann eine wirkungsvolle Kühlung (Entwärmung) oder Heizung des Hauses erreicht werden.

Ein Ausführungsbeispiel der Erfindung ist im folgenden anhand der Zeichnung näher beschrieben, in dieser zeigen:

Fig. 1 einen Vertikalschnitt durch ein erfindungsgemäß ausgebildetes Wandelement ,

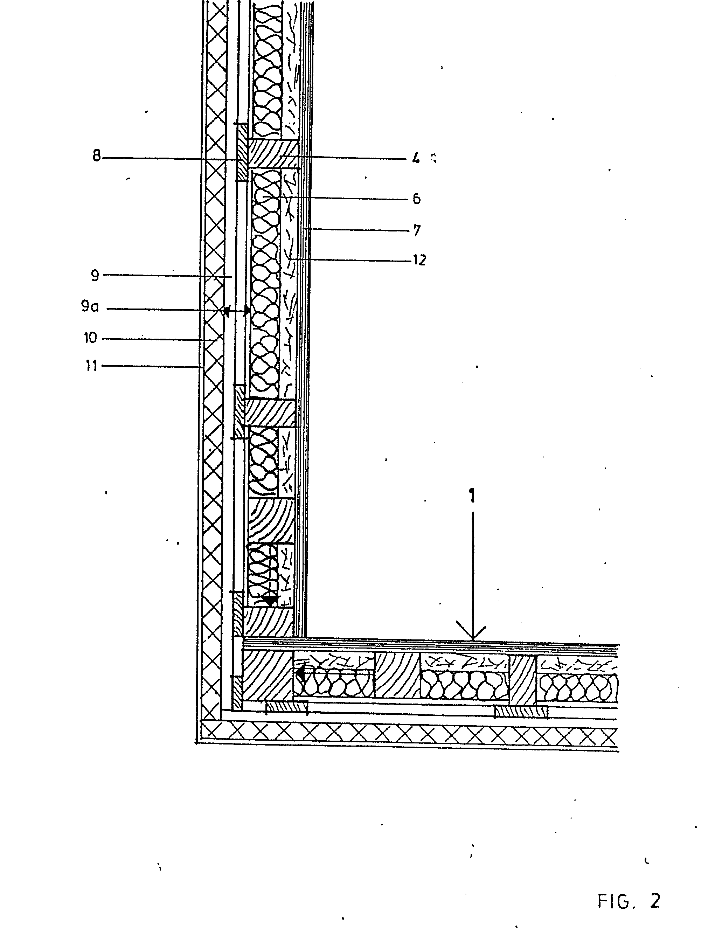

Fig. 2 einen Horizontalschnitt gemäß Linie II-II in Fig. 1,

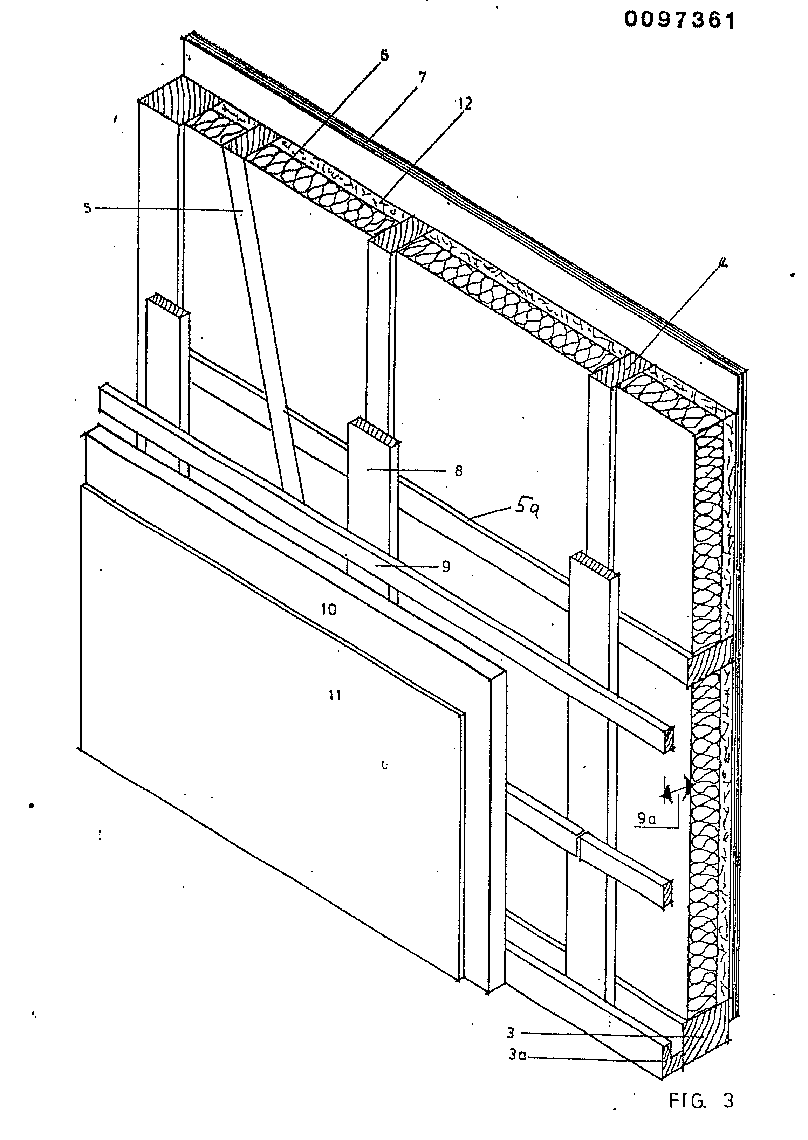

Fig. 3 eine perspektivische Ansicht eines erfindungsgemäßen Wand- und Deckenelementes, teilweise im Schnitt
und

Fig. 4 eine schematische Darstellung eines Schnittes durch ein Haus mit erfindungsgemäß ausgebildeten Wand- und Deckenelementen.

Das in den Figuren dargestellte Wandelement 1 besteht aus einem Obergurt 2, einem Untergurt 3 und mehreren zwischen Ober- und Untergurt angeordneten Ständern 4. Ober- und Untergurt sowie Ständer bilden ein Fachwerk.

Dieses Fachwerk wird durch Verstrebungen 5 versteift, die an den beiden Seiten schräg verlaufend zwischen Ober- und Untergurt eingesetzt sind. Des weiteren erfolgt eine Versteifung durch horizontal verlaufende eingesetzte Balken 5a. Zwischen Ober- und Untergurt ist eine Isolationsschicht 6 aus Kokosfaser sowie eine HWL-Leichtbauplatte 7 angeordnet. Am Ständerwerk ist eine Lattung 8 angebracht, auf der eine Konterlattung 9 befestigt ist. Auf der äußeren Konterlattung 9 ist eine Calciumsilikatplatte 10 befestigt, die mit einem Außenputz 11 versehen ist. Der Raum zwischen der Isolationsschicht 6 und der Calciumsilikatplatte 10, der in sich geschlossen ist, bildet die Klimazone 9a.

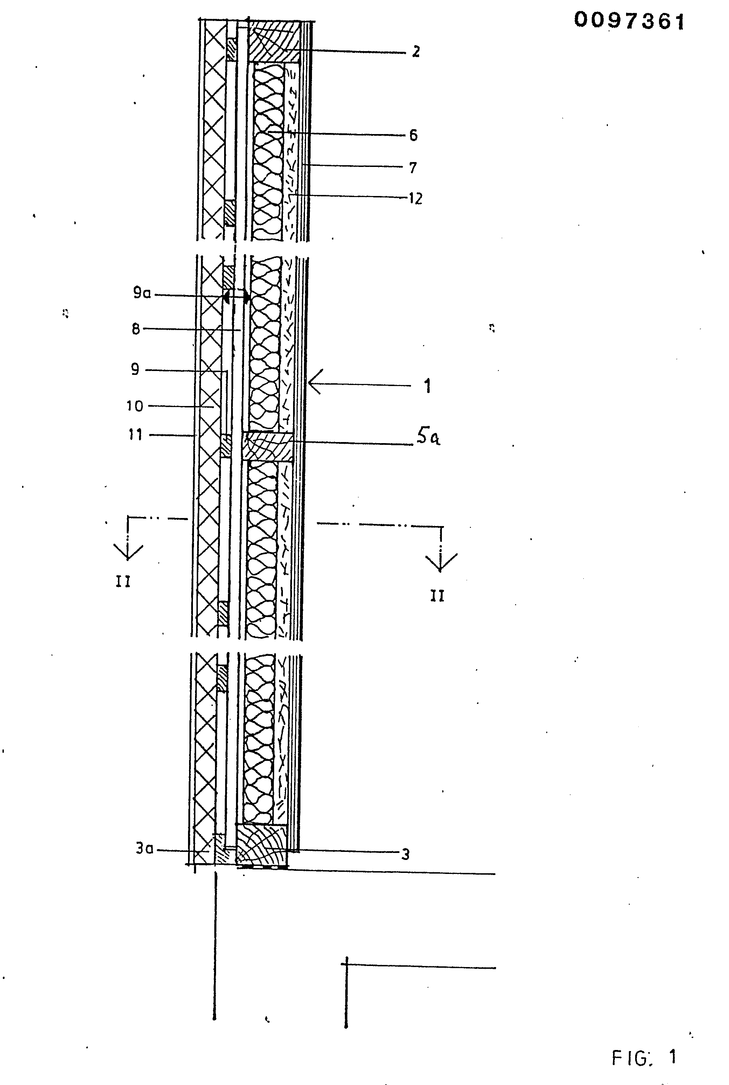

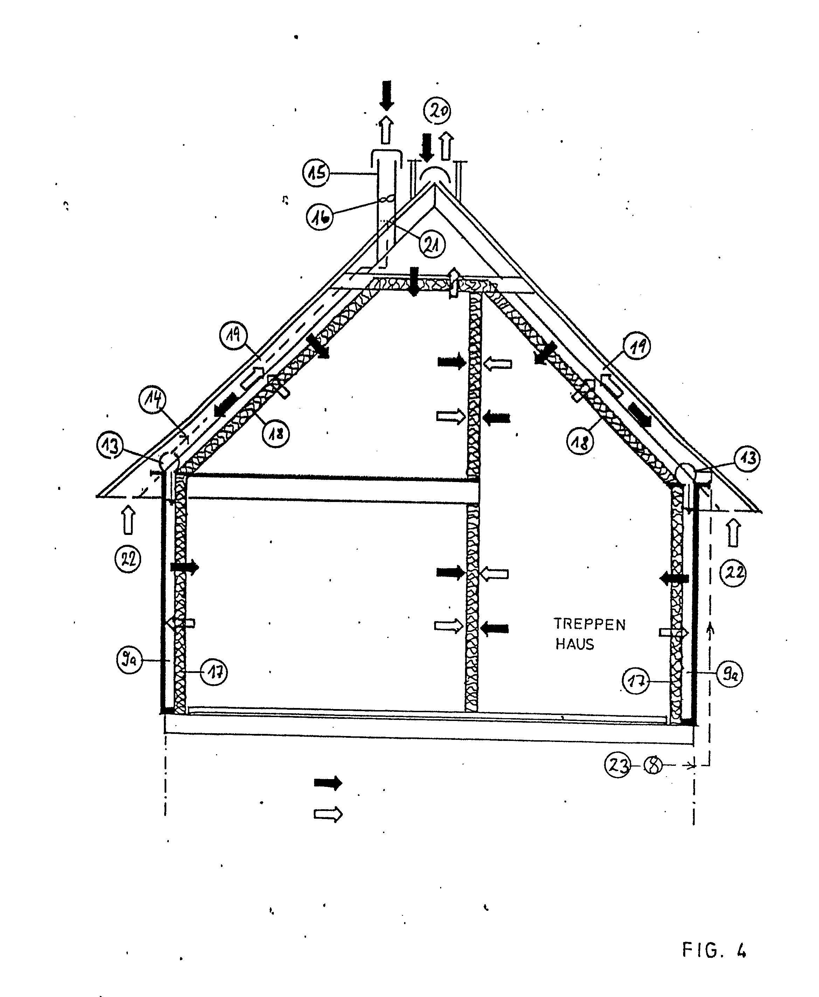

Der Innenabschluß wird durch eine Leichtbauplatte 7 gebildet, die aus einer HWL-Leichtbauplatte bestehen kann oder aber aus einer Lehmfaserplatte. Der Aufbau der tragenden Konstruktion, d.h. des Ständerwerkes, der Isolationsschicht sowie der inneren Abschlußplatte 7 weist eine Luftdurchlässigkeit von 1 - 6 m³/h x m² auf, so daß ein Luftaustausch vom Inneren des Hauses zur Klimazone 9a und in umgekehrter Richtung erfolgen kann. Die Klimazone 9a bildet eine geschlossene Luftzone, die nur über Zu- und Abluftkanäle be- bzw. entlüftet werden kann. Im Ausführungsbeispiel nach Fig. 4 ist im Schnitt in schematischer Darstellung ein Haus dargestellt, das mit einer erfindungsgemäßen Wand-und Deckenplatte versehen ist. Jede Wandplatte weist eine Klimazone 9a auf, die, wie Fig. 1 zeigt, nach oben hin offen ist und an einen Ringkanal 13 angeschlossen ist. Dieser Ringkanal 13 ist wiederum an einen geschlossenen Zu- und Abluftkanal 14 angeschlossen, der mit einem über dem Dach mündenden Schornstein 15 verbunden ist. Im Schornstein 15 ist ein Ventilator 16 angeordnet, mit dessen Hilfe entweder Luft aus der Umgebung in die Klimazone 9a eingepreßt oder aber Luft aus dieser herausgesogen wird. Im ersten Fall entsteht in der Klimazone 9a ein Überdruck und im letzteren Fall ein Unterdruck. Die Luftdurchlässigkeit der tragenden Konstruktion innerhalb der Klimazone 9a ist durch die eingezeichneten Pfeile dargestellt. Wird über den Ventilator 16 Luft in die Klimazone 9a über den Ringkanal 13 eingeblasen, so tritt die Luft durch die Wand 17 in die Wohnräume ein. Die Innenwände des Hauses sind gleichermaßen luftdruchlässig oder aber es sind Luftaustrittsöffnungen vorgesehen, so daß die einströmende Luft zum Dach strömen kann, um dort durch die gleichfalls luftdurchlässigen Decken 18 in den normalerweise belüfteten Zwischenraum zwischen den Decken 18 und der Dachhaut 19 einzutreten. Die Luft strömt dann nach oben und kann durch eine gegen Regeneinfall geschützte Öffnung 20 austreten. Im Schornstein 15 ist unterhalb des Ventilators ein Filter 21 angeordnet, der zur Filterung der eintretenden Luft dient.

Die über den Schornstein 15 in die Klimazone 9a eingedrückte Luft wird in der Regel kalt sein und erwärmt sich beim Durchtritt durch die Porenwand 17, sie dient zugleich als Wärmetauscher. Diese Luft hat beim Eintritt in den Raum in etwa schon Raumtemperatur angenommen, so daß diese nicht nur zugfrei, sondern bereits temperiert, auch durch Aufnahme der Transmissionswärme, in den Raum eintritt. Die durch die Deckenfläche 18 hindurchtretende Luft gibt ihre Wärme an diese ab und wird über die Öffnung 20 abgeführt. Beim Durchtritt gibt die Luft die Wärme teilweise ab, die Wand dient als Wärmetauscher.

Wird in der Klimazone 9a über den Ventilator 16 ein Unterdruck erzeugt, so wird Luft aus dem Inneren des Hauses in die Klimazone 9a abgesaugt, die dann über den Ringkanal 13 und den Schornstein 15 ins Freie austritt. Die nachströmende Luft tritt in das Innere des Hauses über die Decken 18 ein. Die unter der Dachhaut zirkulierende Luft, die durch die Öffnung 22 zwischen Dachhaut 19 und Decke 18 eintreten kann, wird über die Decke angesaugt und nimmt die Temperatur des Hauses an und wird anschließend nach außen in die Klimazone abgesaugt.

Die beiden Phasen werden miteinander kombiniert, so daß bei der ersten Phase, bei der durch die Klimazone 9a Luft in das Innere des Hauses eingedrückt wird, die Wand 17 sich abkühlt, während die Decke durch den Austritt der warmen Abluft sich aufheizt. Nach einem gewissen Zeitraum wird von Phase 1 auf Phase 2 umgeschaltet, wodurch nunmehr die kalte Außenluft durch die Decke 18 eintritt und sich hierbei erwärmt. Die durch die Wände 17 austretende erwärmte Luft kühlt sich beim Druchtritt durch die Wand wieder ab, wobei diese wiederum aufgewärmt wird. Die Phasen werden entsprechend der Aufheizung und der Abkühlung sowie der Wärmekapazität von Wand 17 und Decke 18 umgesteuert, so daß in jedem Fall eine wirksame Kühlung der Abluft und in hohem Maße eine Rückgewinnung der in der Abluft enthaltenen Wärme erzielt wird.

In der Abluftphase wird die jeweils betroffene Wand bzw. Decke ein Wasserdampf-Massenstrom von der warmen zur kalten Seite erhalten, der zur schadlosen Beseitigung dieser u.U. zeitweise kondensierten Dampfmenge führt. Hierzu müssen jedoch zwei Voraussetzungen gegeben sein. Zum ersten müssen die bestimmten Wasserdampfmengen innerhalb der Wände bzw. Decken für eine gewisse Zeit schadlos gebunden werden können, wozu organische Faserstoffe sowie entsprechende Mengen von Lehm und Tonmineralien (Bentonit) und Kokosfaser geeignet sind. Diese Stoffe können bis zum Zwanzigfachen des eigenen Gewichtes an Wasser aufnehmen und auch wieder abgeben. Zum zweiten muß die Klimazone 9a durch die Abschlußplatte aus Calciumsilikat 10 und dem Außenputz nach außen luftdicht abgeschlossen sein und schadlos Wasser- bzw. Wasserdampf im hohen

Maße aufnehmen sowie durch Diffusion und kapilare Leitfähigkeit nach außen abgeführen können.

Bei der Konstruktion ist man davon ausgegangen, daß im
gesamten Haus pro Stunde wenigstens 200 - 300 m³ Frischluft benötigt werden und diese Luftmenge über die Klimazone 9a bzw. in umgekehrter Richtung über die durchströmten
Flächen der Decke,in das Haus hineingeführt werden müssen.
Die Konstruktion mit Klimazone und Atmungslüftung sichert
nicht nur eine absolut zugfreie und hygienisch einwandfreie
sowie ausreichende Frischluftversorgung für die Bewohner des
Hauses, sondern sie erreicht darüberhinaus eine bedeutende
Reduktion der Gesamtwärmeverluste. Die Transmissionswärmeverluste werden etwa um 70 % verringert, während die Lüftungsverluste um etwa 50 % kleiner werden.

Bei hochsommerlichen Temperaturen können die vorstehend beschriebenen zwei Phasen durch eine dritte Phase ergänzt werden, und zwar dadurch, daß kühle Luft aus dem Keller über
einen Ventilator 23 angesogen wird. Die  Zuluftleitung dieses Ventilators 23 ist mit der Ringleitung 13 verbunden. Bei
hohen Außentemperaturen wird der Ventilator 23 über einen
Thermostat eingeschaltet und gleichzeitig eine Abluftklappe
für den Ventilator 16 verschlossen, so daß in der Klimazone
9a ein Überdruck erzeugt wird. Der Ventilator 23 drückt die
kühle Kellerluft über die Klimazone 9a in das Innere des Wohnhauses, wobei diese gleichfalls über die Decken 18 wieder abgeführt wird. Auf diese Art und Weise kann das Haus wirkungsvoll ohne zusätzliche Kühlaggregate entwärmt und damit kühl
gehalten werden. Durch Einsatz eines Wärmefühlers können automatisch die anderen Phasen eingeschaltet werden, sobald im
Inneren des Hauses die Temperatur unter eine festgelegte Grenze fällt. Man erreicht hierdurch, daß auch bei hochsommerlichen Temperaturen nicht nur eine sehr gute Frischluftversorgung,
sondern auch eine Temperierung des Hauses erfolgt. Ist das Haus in einer Gegend angeordnet, wo hohe sommerliche Temperaturen herrschen, so kann die vom Ventilator 23 angesaugte Luft auch durch eine im Erdreich verlegte Rohrleitung gesogen werden, wodurch eine weitere Abkühlung der der Klimazone 9a zugeführten Luft erreicht werden kann. Die Phase 3 kann durch ein Kühlaggregat ergänzt werden.

<u>Patentansprüche</u>:

1. Klima-Wand- und Deckenelement, insbesondere für Fertighäuser, dadurch gekennzeichnet, daß das Wandelement (1) aus einer äußeren, luftundurchlässigen Verkleidungsplatte (10) besteht, an die sich eine allseitig geschlossene Luftzone (9a) anschließt, die sich über die gesamte Fläche des Wand- und Deckenelementes (1) erstreckt und zwischen einer innen liegenden, wärmedämmenden und tragenden Konstruktion (2 - 6, 12), die mit Abstandselementen (8, 9) mit der Verkleidungsplatte (10) und der äußeren Verkleidungsplatte verbunden ist, liegt, daß die wärmedämmende und tragende Konstruktion (2 - 6) als Porenwand mit einer Luftdurchlässigkeit von 1 - 6 $m^3/h \times m^2$ ausgebildet ist und daß die Luftzone (9a) (Klimazone) zumindest in einem Bereich des Wand- und Deckenelementes (1) für den Anschluß an einen Ab- und Zuluftkanal (13) vorbereitet ist.

2. Klimaelement nach Anspruch 1, dadurch gekennzeichnet, daß die Verkleidungsplatte (10) mit einem mineralischen Putz beschichtet ist.

3. Klimaelement nach Anspruch 1 oder 2, dadurch gekennzeichnet, daß das Klimaelement aus biologischen Baustoffen besteht.

4. Klimaelement nach einem der Ansprüche 1 bis 3, dadurch gekennzeichnet, daß die Innenverkleidung (7) aus einer magnesitgebundenen Holz-Woll-Leichtbauplatte (HWL) besteht.

5. Klimaelement nach einem der Ansprüche 1 bis 4, dadurch gekennzeichnet, daß die tragende Konstruktion aus einem Fachwerk besteht, dessen Zwischenräume mit einer Kokosfaserplatte oder -matte ausgefüllt sind.

6. Klimaelement nach Anspruch 5, dadurch gekennzeichnet, daß die Kokosfaserplatte mit einer HWL-Platte und/oder einer Lehm-Ton- und Kokosfaserplatte kombiniert ist.

7. Klimaelement nach einem der Ansprüche 5 oder 6, dadurch gekennzeichnet, daß das Fachwerk mit Calciumsilikatplatten oder -schaum ausgefüllt ist.

8. Klimaelement nach einem der Ansprüche 1 bis 7, dadurch gekennzeichnet, daß die Distanzelemente aus zwei Lattungen (8, 9) bestehen, die je in einer senkrecht zueinander liegenden Ebene verlaufen.

9. Klimaelement nach einem der Ansprüche 1 bis 8, dadurch gekennzeichnet, daß auf die Innenseite der tragenden Konstruktion eine Calcium-Silikat-Platte aufgebracht ist.

10. Klimaelement nach Anspruch 1, dadurch gekennzeichnet, daß die Verkleidungsplatte (10) aus Calciumsilikat besteht.

11. Klimaelement nach Anspruch 10, dadurch gekennzeichnet, daß die Calciumsilikatplatte mit Tellerschrauben oder V2A oder V4A auf die Distanzelemente (8, 9) aufgeschraubt ist.

12. Klimaelement nach Anspruch 11, dadurch gekennzeichnet, daß auf die Calciumsilikatplatte (10) zweilagig ein mineralischer Außenputz mit Seidengitter-Gewebeauflage aufgebracht ist.

13. Klimaelement nach einem der Ansprüche 1 bis 12, dadurch gekennzeichnet, daß die Zu- und Abluftkanäle an einen

0097361

- 3 -

gemeinsamen Ringkanal (13) angeschlossen sind.

14. Klimaelement nach einem der Ansprüche 1 bis 13, dadurch gekennzeichnet, daß die Ringleitung (13) mit einem Zu- und Abluftschornstein verbunden ist.

15. Klimaelement nach Anspruch 14, dadurch gekennzeichnet, daß in die zum Abluftschornstein führende Leitung ein Luftfilter sowie ein Ventilator eingesetzt ist.

16. Klimaelement nach einem der Ansprüche 1 bis 15, dadurch gekennzeichnet, daß die Zu- und Abluftöffnungen des Klimaelementes bzw. der Ringkanal an eine Kühlluftleitung angeschlossen sind..

0097361

FIG. 1

FIG. 2

FIG. 3

FIG. 4

0097361

**0097361**
Nummer der Anmeldung

EP 83 10 6040

Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 727 127 (THOREN) <br> * Ganzes Dokument * <br><br> --- | 1 | E 04 B 2/56 <br> F 24 F 7/06 |
| Y,A | DE-A-1 454 584 (HAMANN) <br> * Ganzes Dokument * <br><br> --- | 1,15, 16 | |
| A | DE-U-7 338 230 (S.A. TOLERIES DE GRENOBLE) * Anspruch 3 * <br><br> --- | 15 | |
| A | DE-A-2 618 833 (REINARTZ) <br><br> --- | | |
| A | CH-A- 369 273 (KOLLER) <br><br> ----- | | |

| | | | RECHERCHIERTE SACHGEBIETE (Int. Cl. ³) |
|---|---|---|---|
| | | | E 04 B 2/00 <br> F 24 F 7/00 |

Der vorliegende Recherchenbericht wurde für alle Patentansprüche erstellt.

| Recherchenort <br> BERLIN | Abschlußdatum der Recherche <br> 19-09-1983 | Prüfer <br> PAETZEL H-J |
|---|---|---|